# EUROPEAN PATENT SPECIFICATION

(11) **EP 1 728 413 B1**
(45) Date of publication and mention of the grant of the patent: **03.09.2008**
(21) Application number: 05703021.5
(22) Date of filing: 22.02.2005
(51) Int. Cl.: H05B 41/282

(54) **LAMP DRIVER USING SOLAR CELLS**
LAMPENTREIBER MIT SOLARZELLEN
CIRCUIT D'ATTAQUE DE LAMPE A CELLULES SOLAIRES

(30) Priority: 05.03.2004 EP 04100890
(43) Date of publication of application: 06.12.2006
(73) Proprietor: Koninklijke Philips Electronics N.V., 5621 BA Eindhoven (NL)
(72) Inventor: HENDRIX, Machiel, A., M., NL-5656 AA Eindhoven (NL)
(74) Representative: Bosma, Rudolphus Hubertus Antonius
(86) International application number: PCT/IB2005/050641
(87) International publication number: WO 2005/089030

(56) References cited:
- US-A- 4 626 983
- US-A- 4 750 102
- US-A- 5 434 477
- PATENT ABSTRACTS OF JAPAN vol. 1997, no. 11, 28 November 1997 (1997-11-28) & JP 09 190885 A (HITACHI LIGHTING LTD), 22 July 1997 (1997-07-22)

## Description

### FIELD OF THE INVENTION

The present invention relates in general to a lamp driver capable of driving a gas discharge lamp, specifically a high-frequency gas discharge lamp, more specifically a high-frequency TL lamp. More particularly, the present invention relates to a lamp driver capable of being powered by a solar cell.

### BACKGROUND OF THE INVENTION

Gas discharge lamps are commonly known. In general, they comprise a light transmitting vessel enclosing a discharge chamber in a gastight manner, an ionizable filling, and a pair of electrodes located opposite each other in the discharge chamber, each electrode being connected to an associated current conductor which extends from the discharge chamber through the lamp vessel to the exterior. During operation, a voltage is applied over said electrodes, and a gas discharge occurs between said electrodes causing a lamp current to flow between the electrodes.

A discharge lamp is typically driven by an electronic ballast or driver supplying an alternating current. Lamp drivers and solar power devices have been developed separately. Typically, a lamp driver is developed for being powered from mains, and comprises:
- an input for receiving AC mains;
- a rectifier for rectifying the mains voltage to a direct voltage;
- a DC/DC up converter for receiving the rectified voltage and for converting this voltage to a higher voltage and usually also for performing a power factor correction for the mains current;
- a half-bridge inverter for inverting said high direct voltage to AC of the proper amplitude (lamp current).

The inverter behaves as a current source. Typically, the inverter operates at a frequency in the order of about 40 - 50 kHz. Therefore, in principle, the lamp is operated at a lamp current having constant magnitude but regularly changing its direction within a very brief time (commutating periods) in a symmetric way, i.e. an electrode is operated as a cathode during 50% of each current period and is operated as anode during the other 50% of each current period.

On the other hand, a typical solar voltage source, capable of receiving solar energy and generating an output voltage, comprises:
- at least one photo-voltaic cell, capable of receiving light and generating an output current;
- a boost converter, receiving the output current from the photo-voltaic cell and generating an output voltage.

Typically, the electric energy provided by a solar voltage source is used to charge a battery or other type of accumulator (e.g. the mains grid), and the battery is used to act as power source for an electric apparatus.

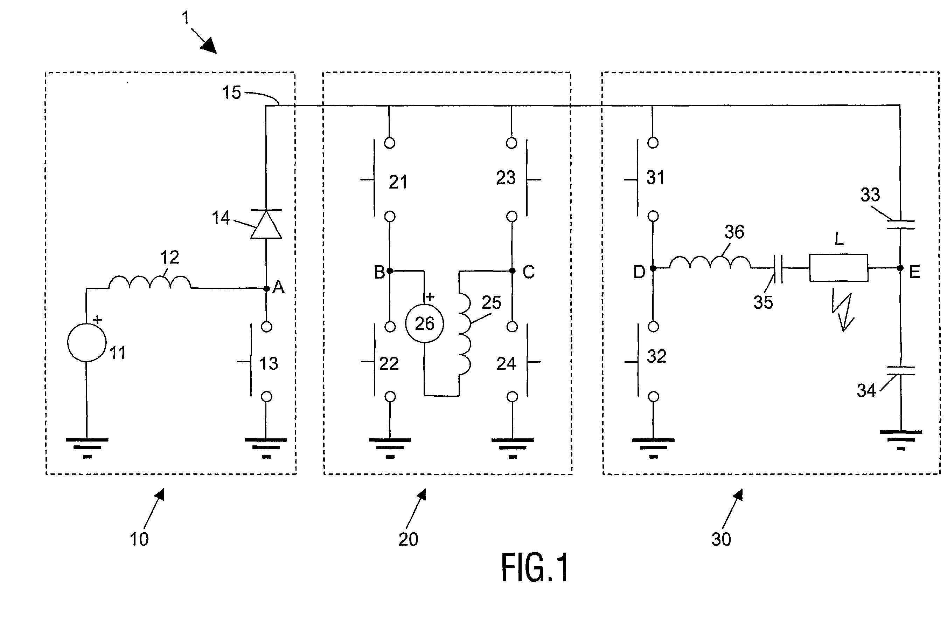

In a lamp driver, it is desirable to be able to use solar energy directly for driving a discharge lamp. Therefore, a solar energy powered lamp driver has been developed, combining elements of a typical solar voltage source and elements of a typical discharge lamp driver. Fig. 1 is a block diagram schematically showing the general design of a prior art solar energy powered lamp driver 1, which comprises three stages, i.e. a boost converter 10, a pulse width modulated inverter 20, and a half-bridge inverter 30.

The boost converter 10 comprises at least one photo-voltaic cell 11, an inductor 12 having one terminal coupled to an output of the photo-voltaic cell 11, a controllable switch 13 coupled between a second inductor 12 terminal and a reference voltage (mass), and a rectifying element 14 having one terminal coupled to a node A between said inductor 12 and said switch 13 and having another terminal coupled to an output 15 of the boost converter 10.

The pulse width modulated inverter 20 comprises a first branch of two controllable switches 21 and 22 coupled in series between said boost converter output 15 and said reference voltage (mass); a node between said two controllable switches 21 and 22 is indicated at B. The pulse width modulated inverter 20 comprises a second branch of two controllable switches 23 and 24 coupled in series between said boost converter output 15 and said reference voltage (mass); a node between said two controllable switches 23 and 24 is indicated at C.

The half-bridge inverter 30 comprises a third branch of two controllable switches 31 and 32 coupled in series between said boost converter output 15 and said reference voltage (mass); a node between said two controllable switches 31 and 32 is indicated at D. The half-bridge inverter 30 comprises a fourth branch of two capacitors 33 and 34 coupled in series between said boost converter output 15 and said reference voltage (mass); a node between said two capacitors 33 and 34 is indicated at E. The half-bridge inverter 30 further comprises an arrangement of a lamp L, a capacitor 35 and an inductor 36 coupled in series between said two nodes D and E of the converter 30.

The pulse width modulated inverter 20 further comprises an inductor 25 which is coupled, in series with an AC mains input/output 26, between said two nodes B and C of the inverter 20. If there is insufficient solar energy available, energy is received from the AC mains for powering the lamp L. If there is more solar energy available than consumed by the lamp L, the surplus is fed back to the mains.

The said switches, which are typically implemented as MOSFETs, are driven by a switch controller not shown in figure 1 for sake of simplicity.

Such prior art solar energy powered lamp driver 1 has several disadvantages. The device has a large number of components, i.e. at least seven switches and at least three inductors. Further, there is a considerable loss of energy from photo-voltaic cell 11 to lamp L because of the three conversion stages.

An important objective of the present invention is to reduce these disadvantages. More particularly, it is an objective of the present invention to provide a solar energy powered lamp driver with a reduced component count and an improved efficiency.

### SUMMARY OF THE INVENTION

According to an important aspect of the present invention, the output of the boost converter is connected directly to a node between the two controllable switches of the half-bridge inverter/converter, and the mains input/output is connected in parallel to the series arrangement of lamp and series inductor, thus allowing the pulse width modulated inverter stage to be omitted entirely while allowing the performance of the driver to be maintained.

It is noted that US-5.434.477 discloses a driver comprising a half-bridge inverter, but this driver is not powered by solar energy.

It is further noted that it is known per se from JP-09.190886 to use solar energy for powering a lamp.

### BRIEF DESCRIPTION OF THE DRAWINGS

These and other aspects, features and advantages of the present invention will be further explained by the following description with reference to the drawings, in which same reference numerals indicate same or similar parts, and in which:
Fig. 1 is a block diagram schematically showing the general design of a prior art solar energy powered lamp driver;
Fig. 2 is a block diagram schematically showing the general design of a first embodiment of a solar energy powered lamp driver according to the present invention;
Fig. 3 is a block diagram schematically showing the general design of a second embodiment of a solar energy powered lamp driver according to the present invention.

### DETAILED DESCRIPTION OF THE INVENTION

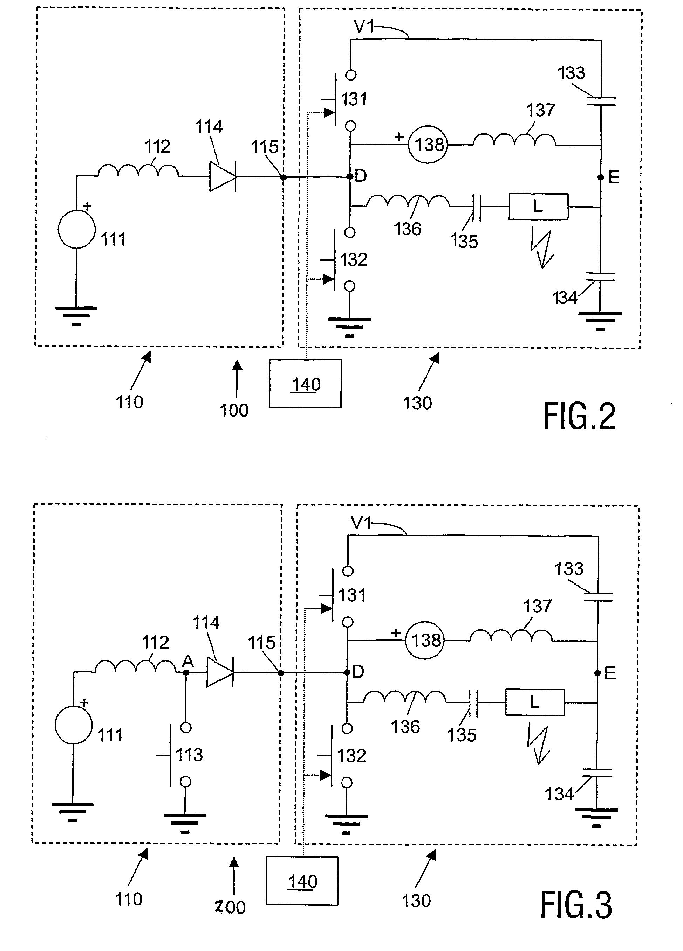

Fig. 2 schematically shows a block diagram of a first embodiment of a solar energy powered lamp driver 100 according to the present invention, comprising a boost stage 110 and a half-bridge inverter 130.

The boost converter 110 comprises at least one photo-voltaic cell 111, an inductor 112 having one terminal coupled to an output of the photo-voltaic cell 111 and having its other terminal coupled to a first terminal (in this case an anode) of a rectifying element 114 (shown as a diode) having one terminal (in this case a cathode) coupled to an output 115 of the boost converter 110.

The half-bridge inverter 130 comprises a first branch of two controllable switches 131 and 132 coupled in series between a first reference voltage V1 and a second reference voltage (mass); a node between said two controllable switches 131 and 132 is indicated at D. The half-bridge inverter 130 comprises a second branch of two buffer capacitors 133 and 134 coupled in series between said first reference voltage V1 and said second reference voltage (mass); a node between said two capacitors 133 and 134 is indicated at E. The half-bridge inverter 130 further comprises an output branch DE connected between said two nodes D and E of the converter 130. In the embodiment shown, the output branch DE comprises an arrangement of a lamp L, a capacitor 135 and an inductor 136 coupled in series between said two nodes D and E of the converter 130. In this respect, it is noted that the lamp L actually is not part of the converter 130; the converter 130 comprises a lamp output for receiving a lamp L, but these details, which will be clear to a person skilled in the art, are not illustrated in Fig. 2.

Since the reference voltage V1 is not provided by an external source, but is derived from the mains and/or the solar cell through boost-conversion operation of the two switches 131, 132, the node between first switch 131 and first buffer capacitor 133 will hereinafter be indicated as "first reference node". Likewise, the node between second switch 132 and second buffer capacitor 134 (mass) will hereinafter be indicated as "second reference node".

The half-bridge inverter 130 further comprises an inductor 137 which is coupled, in series with an AC mains input/output 138, between said two nodes D and E of the converter 130, i.e. in parallel to the series arrangement of lamp L, capacitor 135 and inductor 136. If there is insufficient solar energy available, energy is received from the AC mains for powering the lamp L. In this case the switches work as a voltage-doubling boost converter that stores energy in capacitors 133 and 134. At the same time, these switches work as an inverter supplied from these capacitors 133 and 134, delivering energy to lamp 136. The two energy streams can be independently controlled by driving switches 131 and 132 with a mix of PWM and FM (giving the necessary two degrees of freedom). If there is more solar energy available than consumed by the lamp L, the surplus is fed back to the mains 138.

The said switches, which are typically implemented as MOSFETs, are driven by a switch controller 140.

When comparing the first solar energy powered lamp driver 100 according to the present invention with the prior art driver 1 as illustrated in Fig. 1, it will immediately be evident that the driver 100 of the invention has less components, especially less switches: only two switches, i.e. first switch 131 and second switch 132, suffice in this embodiment. First switch 131 performs the double function of upper inverter switches (compare prior art switches 21 and 23), and upper half-bridge switch (compare prior art switch 31). Second switch 132 performs the triple function of boost switch (compare prior art switch 13), lower inverter switches (compare prior art switches 22 and 24), and lower half-bridge switch (compare prior art switch 32).

The switch controller 140 generates control signals for controlling the two switches 131 and 132 to either their conductive or their non-conductive state, taking care that the two switches are not conductive simultaneously, as is commonly known to persons skilled in the art. The switch controller 140 is adapted to drive the two switches with a combination of frequency modulation (FM) and pulse width modulation (PWM). More particularly, the switch controller 140 is adapted to set the switching frequency of the two switches 131 and 132 such as to obtain a certain desired lamp current, and to set the duty cycle of the switches (i.e. the ratio of the ON period of a switch to the entire switching period) such as to obtain a certain desired mains current. Preferably, the switches are controlled to maintain a fixed switching frequency during a mains cycle.

The switching frequency of the switches 131, 132 and the impedance of the decoupling capacitor 135 are chosen such that the lamp L can not be powered directly from mains 138. Typically, the mains frequency is in the order of 50-60 Hz, and the operating frequency of the switches is selected well above this mains frequency, preferably not lower than 20 kHz. In case the lamp L is a high-frequency TL lamp, an operating frequency in the order of 40-50 kHz is adequate.

By selecting a large distance between mains frequency and switch operating frequency, it is relatively easily possible to select a suitable value for the decoupling capacitor 135 so that it has a relatively large impedance for the mains frequency and a relatively low impedance for the switch operating frequency. This will prevent the mains current from flowing directly to the lamp L, while allowing the lamp L to receive high-frequency current from the buffer capacitors. Likewise, it is relatively easily possible to select a suitable value for the inductor 137 in series with the mains 138, such that it has a high impedance in order to prevent high-frequency components from reaching the mains.

Fig. 3 schematically shows a second embodiment of a solar energy powered lamp driver 200 according to the present invention, which is identical to the first embodiment 100 except that an additional switch 113 is added to the boost stage 110, connected between on the one hand a node A between the inductor 112 and the rectifying element 114 and on the other hand the second reference node (mass). The function of this additional switch 113 is comparable to the switch 13 in the boost converter 10 of the prior art driver 1.

When designing a lamp driver, there are three important performance parameters which should ideally be optimized at the same time:
1a- power quality if there is no or insufficient solar energy available (for instance during the night) and the driver consumes energy from the mains; desirably, power quality involves a power factor in the order of 1 and a total harmonic distortion less than 30%;
1b- power quality of the power provided to the mains, in case of a surplus of solar energy (i.e. much sun light and/or little or no lamp power consumption);
2- constant lamp power, i.e. ripple-free and flicker-free light output;
3- maximum power point tracking, i.e. a setting such that always maximum power is taken from the solar cells.

In the prior art driver 1 as illustrated in Fig. 1, which comprises three individual converter stages which are driven independently, the setting of the boost converter stage 10 is optimized to fulfil the requirement of the third parameter (maximum power point tracking), the setting of the half-bridge stage 30 is optimized to fulfil the requirement of the second parameter (ripple-free and flicker-free light output), and the setting of the inverter stage 20 is optimized to fulfil the requirement of the first parameter (power quality).

In the embodiment of Fig. 3, which comprises three switches which can basically be controlled independently, it is possible to optimize all three of said parameters independently. In the embodiment of Fig. 2, which is advantageous in that it comprises only two switches, it would seem that only two of said parameters can be optimized independently. However, in Fig. 2 it is possible to change the switching frequency of both switches together *and* the dutycyle of each switch individually. The average dutycyle controls the mains current, while the dutycyle difference controls the voltage balance on the two buffer capacitors 133, 134 can be changed. This voltage balance influences the necessary duty cycle and frequency of the lower switch, thus indirectly influencing the maximum power point tracking.

It should be clear to a person skilled in the art that the present invention is not limited to the exemplary embodiments discussed above, but that several variations and modifications are possible within the protective scope of the invention as defined in the appending claims.

For instance, parallel to the series arrangement of lamp L, capacitor 135 and inductor 136, or instead of this series arrangement, a transformer driving a rectifier can be connected, so that the driver 100, 200 according to the present invention can also be provided with a battery charger output.

## Claims

1. Solar energy powered lamp driver (100; 200) capable of driving a gas discharge lamp (L), comprising a half-bridge inverter (130), comprising:
- a first branch of two controllable switches (131, 132) coupled in series between a first reference node (V1) and a second reference node (mass);
- a second branch of two buffer capacitors (133, 134) coupled in series between said first reference node (V1) and said second reference node (mass);
- an output branch (DE) connected between on the one hand a first node (D) between said two controllable switches (131, 132) and on the other hand a second node (E) between said two buffer capacitors (133, 134);
the driver further comprising:
- a boost converter (110), having an output (115) connected directly to said first node (D) between said two controllable switches (131, 132);
wherein the output branch (DE) comprises a series arrangement of an inductor (137) and an AC mains input/output (138).

2. Driver according to claim 1, wherein the output branch (DE) comprises a series arrangement of a lamp (L) output, a decoupling capacitor (135) and an inductor (136).

3. Driver according to claim 1, wherein the output branch (DE) comprises a first series arrangement of a lamp (L) output, a decoupling capacitor (135) and an inductor (136), and also comprises a second series arrangement of an inductor (137) and an AC mains input/output (138), said second series arrangement being connected in parallel to said first series arrangement.

4. Driver according to claim 3, wherein a switch controller (140) is adapted to drive said two switches (131, 132) at a switching frequency well above a mains frequency, preferably at a switching frequency not lower than 20 kHz, more preferably at a switching frequency in the order of 40-50 kHz.

5. Driver according to claim 4, wherein said decoupling capacitor (135) has a relatively large impedance for the mains frequency and a relatively low impedance for the switch operating frequency.

6. Driver according to claim 4, wherein said inductor (137) has a relatively high impedance for the switch operating frequency and a relatively low impedance for the mains frequency.

7. Driver according to claim 1, wherein the output branch (DE) comprises a transformer driving a rectifier.

8. Driver according to claim 1, further comprising a switch controller (140) adapted to generate control signals for controlling said two switches (131, 132) to either their conductive or their non-conductive state, the switch controller (140) being adapted to drive the two switches with a combination of frequency modulation (FM) and pulse width modulation (PWM).

9. Driver according to claim 8, wherein the switch controller (140) is adapted to set the switching frequency of the two switches (131, 132) such as to obtain a certain desired lamp current, and to set the duty cycle of the switches such as to obtain a certain desired mains current.

10. Driver according to claim 9, wherein the switch controller (140) is adapted to maintain a fixed switching frequency.

11. Driver according to claim 9, wherein the switch controller (140) is adapted to set a common switching frequency for the two switches (131, 132) and to set individual duty cycles for the two switches (131, 132).

12. Driver according to claim 1, wherein the boost converter (110) comprises at least one photo-voltaic cell (111), a boost inductor (112) having one terminal coupled to an output of the photo-voltaic cell (111) and having its other terminal coupled to a first terminal of a rectifying element (114), the rectifying element having an output terminal coupled to the output (115) of the boost converter (110).

13. Driver according to claim 12, wherein the boost converter (110) further comprises an additional controllable switch (113) connected between on the one hand a node A between the boost inductor (112) and the rectifying element (114) and on the other hand the second reference node (mass).

## Patentansprüche

1. Mit Solarenergie gespeister Lampentreiber (100; 200), der fähig ist, eine Gasentladungslampe (L) anzusteuern, mit einem Halbbrückenwechselrichter (130), mit:
- einem ersten Zweig aus zwei steuerbaren Schaltern (131, 132), die zwischen einem ersten Bezugsknotenpunkt (V1) und einem zweiten Bezugsknotenpunkt (Masse) in Reihe geschaltet sind;
- einem zweiten Zweig aus zwei Pufferkondensatoren (133, 134), die zwischen dem genannten ersten Bezugsknotenpunkt (V1) und dem genannten zweiten Bezugsknotenpunkt (Masse) in Reihe geschaltet sind;
- einem Ausgangszweig (DE), der zwischen einerseits einen ersten Knotenpunkt (D) zwischen den genannten zwei steuerbaren Schaltern (131, 132) und andererseits einen zweiten Knotenpunkt (E) zwischen den genannten zwei Pufferkondensatoren (133, 134) geschaltet ist;
welcher Treiber weiterhin umfasst:
- einen Hochsetzsteller (110), der einen direkt mit dem genannten ersten Knotenpunkt (D) zwischen den genannten zwei steuerbaren Schaltern (131, 132) verbundenen Ausgang (115) aufweist;
wobei der Ausgangszweig (DE) eine Reihenschaltung aus einer Drossel (137) und einem Wechselspannungsnetz-Eingang/Ausgang (138) umfasst.

2. Treiber nach Anspruch 1, wobei der Ausgangszweig (DE) eine Reihenschaltung aus einem Ausgang einer Lampe (L), einem Entkoppelkondensator (135) und einer Drossel (136) umfasst.

3. Treiber nach Anspruch 1, wobei der Ausgangszweig (DE) eine erste Reihenschaltung aus einem Ausgang einer Lampe (L), einem Entkoppelkondensator (135) und einer Drossel (136) umfasst und auch eine zweite Reihenschaltung aus einer Drossel (137) und einem Wechselspannungsnetz-Eingang/Ausgang (138) umfasst, welche zweite Reihenschaltung parallel zu der ersten Reihenschaltung geschaltet ist.

4. Treiber nach Anspruch 3, wobei eine Schalter-Steuereinheit (140) ausgebildet ist, die genannten zwei Schalter (131, 132) bei einer Schaltfrequenz weit oberhalb einer Netzfrequenz zu steuern, vorzugsweise bei einer Schaltfrequenz, die nicht niedriger als 20 kHz ist, bevorzugter bei einer Schaltfrequenz in der Größenordnung von 40 - 50 kHz.

5. Treiber nach Anspruch 4, wobei der genannte Entkoppelkondensator (135) eine relativ große Impedanz für die Netzfrequenz und eine relativ niedrige Impedanz für die Schalter-Betriebsfrequenz hat.

6. Treiber nach Anspruch 4, wobei die genannte Drossel (137) eine relativ große Impedanz für die Schalter-Betriebsfrequenz und eine relativ niedrige Impedanz für die Netzfrequenz hat.

7. Treiber nach Anspruch 1, wobei der Ausgangszweig (DE) einen Transformator umfasst, der einen Gleichrichter ansteuert.

8. Treiber nach Anspruch 1, weiterhin mit einer Schalter-Steuereinheit (140), die ausgebildet ist, Steuersignale zu generieren, um die genannten zwei Schalter (131, 132) in entweder ihren leitenden oder ihren nicht leitenden Zustand zu steuern, wobei die Schalter-Steuereinheit (140) ausgebildet ist, die zwei Schalter mit einer Kombination aus Frequenzmodulation (FM) und Pulsweitenmodulation (PWM) anzusteuern.

9. Treiber nach Anspruch 8, wobei die Schalter-Steuereinheit (140) ausgebildet ist, die Schaltfrequenz der zwei Schalter (131, 132) so einzustellen, dass ein bestimmter gewünschter Lampenstrom erhalten wird, und das Tastverhältnis der Schalter so einzustellen, dass ein bestimmter gewünschter Netzstrom erhalten wird.

10. Treiber nach Anspruch 9, wobei die Schalter-Steuereinheit (140) ausgebildet ist, eine feste Schaltfrequenz aufrechtzuerhalten.

11. Treiber nach Anspruch 9, wobei die Schalter-Steuereinheit (140) ausgebildet ist, eine gemeinsame Schaltfrequenz für die zwei Schalter (131, 132) und individuelle Tastverhältnisse für die zwei Schalter (131, 132) einzustellen.

12. Treiber nach Anspruch 1, wobei der Hochsetzsteller (110) zumindest ein Photoelement (111) umfasst, wobei die eine Klemme einer Boostdrossel (112) mit einem Ausgang des Photoelementes (111) und deren andere Klemme mit einer ersten Klemme eines Gleichrichtelementes (114) gekoppelt ist, wobei das Gleichrichtelement eine Ausgangsklemme hat, die mit dem Ausgang (115) des Hochsetzstellers (110) gekoppelt ist.

13. Treiber nach Anspruch 12, wobei der Hochsetzsteller (110) weiterhin einen zusätzlichen steuerbaren Schalter (113) umfasst, der zwischen einerseits einen Knotenpunkt A zwischen der Boostdrossel (112) und dem Gleichrichtelement (114) und andererseits den zweiten Bezugsknotenpunkt (Masse) geschaltet ist.

## Revendications

1. Circuit d'attaque de lampe alimenté en énergie solaire (100; 200) qui est capable d'exciter une lampe à décharge à gaz (L), comprenant un inverseur en demi-pont (130), comprenant:
- une première branche de deux commutateurs contrôlables (131, 132) qui sont couplés en série entre un premier noeud de référence (V1) et un deuxième noeud de référence (masse);
- une deuxième branche de deux condensateurs tampons (133, 134) qui sont couplés en série entre ledit premier noeud de référence (V1) et ledit deuxième noeud de référence (masse);
- une branche de sortie (DE) qui est connectée entre d'une part un premier noeud (D) entre lesdits deux commutateurs contrôlables (131, 132) et d'autre part un deuxième noeud (E) entre lesdits deux condensateurs tampons (133, 134);
le circuit d'attaque comprenant encore:
- un convertisseur élévateur de fréquence (110) ayant une sortie (115) qui est connectée directement audit premier noeud (D) entre lesdits deux commutateurs contrôlables (131, 132);
dans lequel la branche de sortie (DE) comprend un montage en série d'une inductance (137) et d'une entrée/sortie du secteur CA.

2. Circuit d'attaque selon la revendication 1, dans lequel la branche de sortie (DE) comprend un montage en série d'une sortie de la lampe (L), un condensateur de découplage (135) et une inductance (136).

3. Circuit d'attaque selon la revendication 1, dans lequel la branche de sortie (DE) comprend un premier montage en série d'une sortie de la lampe (L), un condensateur de découplage (135) et une inductance (136), et comprend également un deuxième montage en série d'une inductance (137) et d'une entrée/sortie du secteur CA (138), ledit deuxième montage en série étant connecté en parallèle audit premier montage en série.

4. Circuit d'attaque selon la revendication 3, dans lequel un contrôleur de commutation (140) est adapté de manière à exciter lesdits deux commutateurs (131, 132) à une fréquence de commutation bien au-dessus d'une fréquence du secteur, de préférence à une fréquence de commutation qui n'est pas inférieure à 20 kHz, plus préférentiellement à une fréquence de commutation de l'ordre de 40 à 50 kHz.

5. Circuit d'attaque selon la revendication 4, dans lequel ledit condensateur de découplage (135) présente une impédance relativement haute pour la fréquence du secteur et une impédance relativement basse pour la fréquence de fonctionnement de commutation.

6. Circuit d'attaque selon la revendication 4, dans lequel ladite inductance (137) présente une impédance relativement haute pour la fréquence de fonctionnement de commutation et une impédance relativement basse pour la fréquence du secteur.

7. Circuit d'attaque selon la revendication 1, dans lequel la branche de sortie (DE) comprend un transformateur excitant un redresseur.

8. Circuit d'attaque selon la revendication 1, comprenant encore un contrôleur de commutation (140) qui est adapté de manière à contrôler lesdits deux commutateurs (131, 132) ou bien à leur état conducteur ou bien à leur état non conducteur, le contrôleur de commutation (140) étant adapté de manière à exciter les deux commutateurs avec une combinaison de la modulation de fréquence (FM) et de la modulation de largeur d'impulsion (PWM).

9. Circuit d'attaque selon la revendication 8, dans lequel le contrôleur de commutation (140) est adapté à régler la fréquence de commutation des deux commutateurs (131, 132) de manière à obtenir un certain courant souhaité de la lampe et à régler le rapport cyclique des commutateurs de manière à obtenir un certain courant souhaité du secteur.

10. Circuit d'attaque selon la revendication 9, dans lequel le contrôleur de commutation (140) est adapté de manière à maintenir une fréquence de commutation fixe.

11. Circuit d'attaque selon la revendication 9, dans lequel le contrôleur de commutation (140) est adapté de manière à régler une fréquence de commutation commune pour les deux commutateurs (131, 132) et à régler des rapports cycliques individuels pour les deux commutateurs (131, 132).

12. Circuit d'attaque selon la revendication 1, dans lequel le convertisseur élévateur de fréquence (110) comprend au moins une cellule photovoltaïque (111), une inductance élévatrice (112) ayant une borne qui est couplée à une sortie de la cellule photovoltaïque (111) et ayant son autre borne qui est couplée à une première borne d'un élément redresseur (114), l'élément redresseur ayant une borne de sortie qui est couplée à la sortie (115) du convertisseur élévateur de fréquence (110).

13. Circuit d'attaque selon la revendication 12, dans lequel le convertisseur élévateur de fréquence (110) comprend encore un commutateur contrôlable additionnel (113) qui est connecté entre d'une part un noeud A entre l'inductance élévatrice (112) et l'élément redresseur (114) et d'autre part le deuxième noeud de référence (masse).
